# EUROPÄISCHE PATENTSCHRIFT

(11) **EP 3 491 453 B1**
(45) Veröffentlichungstag und Bekanntmachung des Hinweises auf die Patenterteilung: **05.08.2020**
(21) Anmeldenummer: 17708413.4
(22) Anmeldetag: 26.01.2017
(51) Int. Cl.: G02C 5/22

(54) **SCHARNIERGELENK FÜR EINE BRILLE**
HINGE FOR SPECTACLES
CHARNIERE POUR LUNETTES

(30) Priorität: 04.02.2016 AT 500672016
(43) Veröffentlichungstag der Anmeldung: 05.06.2019
(73) Patentinhaber: Kropf, Ralf, 4020 Linz (AT)
(72) Erfinder: Kropf, Ralf, 4020 Linz (AT)
(74) Vertreter: Hübscher & Partner Patentanwälte GmbH
(86) Internationale Anmeldenummer: PCT/AT2017/050001
(87) Internationale Veröffentlichungsnummer: WO 2017/132712

(56) Entgegenhaltungen:
- EP-A1- 2 738 592
- AT-U1- 12 049
- AT-U1- 12 049
- DE-A1- 3 404 511
- DE-A1- 19 629 491
- US-B1- 6 231 181
- US-B1- 6 438 798

## Beschreibung

### Technisches Gebiet

Die Erfindung bezieht sich auf ein Scharniergelenk für eine Brille mit einem einen Scharnierzapfen aufweisenden ersten und einem den Scharnierzapfen zangenartig umgreifende Arme besitzenden zweiten Scharnierteil.

Es sind Brillenscharniere bekannt (EP 2738592 A1), die zwei Scharnierteile aufweisen, von denen einer einen Scharnierzapfen umfasst, der von zwei Armen des anderen Scharnierteiles zangenartig unter Vorspannung umgriffen wird, wobei die Lagerschalen der Arme bzw. die Scharnierzapfen Rastzähne zum Verhindern eines unbeabsichtigten Verdrehens der Scharnierteile zueinander aufweisen. Nachteilig ist allerdings, dass die beiden Arme aufgrund der für eine Stabilität des Scharnierteils erforderlichen Vorspannung auf der einen und aufgrund des Lösens der Verrastung bei einem Drehen der Scharnierteile zueinander auf der anderen Seite entweder verhältnismäßig lang oder entsprechend elastisch ausgestaltet werden müssen, was mögliche Fertigungsmaterialien für solche Scharniere erheblich einschränkt und eine kleine Baugröße verhindert. Ähnliche Scharniere sind auch aus den Druckschriften US 6438798 sowie AT 12049 bekannt.

Darüber hinaus sind Brillenscharniere bekannt (DE1807186 A1), deren Scharnierzapfen eine mehrkantenförmige Querschnittsfläche besitzen, die von den Armen formschlüssig umgriffen werden. Aufgrund der Formgebung der Ouerschnittsfläche ergeben sich dadurch bestimmte stabile Scharnierpositionen, sodass auch mit dieser Ausführungsform konstruktive Einschränkungen verbunden sind.

### Darstellung der Erfindung

Der Erfindung liegt somit die Aufgabe zugrunde, ein Brillenscharnier der eingangs geschilderten Art so auszugestalten, dass eine kompakte Bauform bei gleichzeitiger Stabilität ermöglicht wird, ohne Schraubverbindungen benützen zu müssen und damit in der Materialwahl eingeschränkt zu sein. Insbesondere ist es Aufgabe der Erfindung ein Brillenscharnier zur Verfügung zu stellen, dass vollständig ohne Metall- oder Kunststoffteile auskommt.

Die Erfindung löst die gestellte Aufgabe dadurch, dass der zweite Scharnierteil zwischen seinen beiden Armen eine radial zum Scharnierzapfen verlaufende Rastzunge aufweist, die wechselweise in eine von wenigstens zwei Rastaufnahmen des Scharnierzapfens eingreift.

Aufgrund dieser konstruktiven Merkmale können die die Lagerschalen bildenden Arme den Scharnierzapfen ohne Vorspannung umgreifen, während lediglich die Rastzunge so flexibel ausgestaltet werden muss, dass eine Drehung des Scharniers ermöglicht wird. Selbstverständlich können auch mehrere Rastaufnahmen des Scharnierzapfens zum Eingriff der Rastzunge vorgesehen sein.

Besonders vorteilhafte Konstruktionsbedingungen ergeben sich, wenn die Arme des zweiten Scharnierteiles im Bereich ihres offenen Endes den Scharnierzapfen aufnehmende Lagerschalen bilden, wobei von dem mit radialem Abstand vom Scharnierzapfen verlaufenden, die beiden Arme verbindenden Steg die Rastzunge absteht. Aufgrund dessen, dass der Steg vom Scharnierzapfen radial beabstandet ist, vorzugsweise im Bereich zwischen einem und zwei Radien des Lagerzapfens, kann trotz einer kompakten Bauweise des Scharniergelenkes die Rastzunge eine entsprechende Länge aufweisen, sodass das Fertigungsmaterial eines erfindungsgemäßen Scharniergelenkes nur eine verhältnismäßig geringe Elastizität aufweisen muss. Zur Fertigung des Scharniergelenks eignen sich daher insbesondere Werkstoffe wie Holz sowie insbesondere Horn.

In diesem Zusammenhang können die Arme im Bereich des Stegs eine Einschnürung aufweisen, um Raum für ein Verformen der elastischen Rastzunge zu schaffen.

Damit ein Verdrehen des Scharniergelenkes über die gewünschte Offenstellung vermieden wird, kann einer der beiden Arme des zweiten Scharnierteils länger als der andere ausgebildet sein und einen Drehanschlag für den ersten Scharnierteil bilden. Kommt es zu einer Überbeanspruchung der Scharniers bei einem Verdrehen in Offenstellung, so führt der Drehanschlag dazu, dass sich bei einer geeigneten Elastizität des Fertigungsmaterials der Scharnierzapfen des ersten Scharnierteils durch eine elastische Verformung der Arme des zweiten Scharnierteils aus den Lagerschalen löst, womit sich die beiden Scharnierteile trennen, ohne dass es zu einem Materialbruch kommt. Dies hat darüber hinaus den Vorteil, dass Scharnierteile einfach getauscht werden können, um beispielsweise an den Scharnierteilen befestigte Brillenrahmen oder Brillenbügel zu wechseln.

Zur Erhöhung der mechanischen Stabilität des Scharniergelenks insbesondere quer zur Scharnierachse kann der zweite Scharnierteil zwei die Arme bildende Scharnierlappen aufweisen, zwischen denen ein mittlerer Scharnierlappen des ersten Scharnierteils geführt ist, und wobei beidseits des mittleren Scharnierlappens zwei den Scharnierzapfen bildende Zapfenstummel abstehen.

Besonders günstige Eigenschaften ergeben sich für die Rastverbindung zwischen der Rastzunge und den Rastaufnahmen des Scharnierzapfens, wenn der Scharnierlappen des ersten Scharnierteils zwischen zwei Scharnierlappen der Rastzunge geführt ist. Auf diese Weise ergibt sich einerseits ein besonders großer geführter Bereich des Scharnierlappens des ersten Scharnierteils und damit eine hohe mechanische Stabilität, anderseits können die Rastzungen beidseits des Scharnierlappens des ersten Scharnierteils und damit für sich kleiner als eine durchgehende Rastzunge ausgeführt werden, was eine leichtere Verformbarkeit der Rastzungen mit sich bringt.

### Kurze Beschreibung der Zeichnung

In der Zeichnung ist der Erfindungsgegenstand beispielsweise dargestellt. Es zeigen
- Fig. 1: einen Schnitt durch ein erfindungsgemäßes Scharniergelenk quer zur Scharnierachse in einer Offenstellung,
- Fig. 2: das Scharniergelenk der Fig. 1 in einer Schließstellung und
- Fig. 3: eine perspektivische Ansicht auf das Scharniergelenk der Fig. 1 und 2 in ei-nem größeren Maßstab.

### Weg zur Ausführung der Erfindung

Ein erfindungsgemäßes Scharniergelenk für eine Brille umfasst einen ersten Scharnierteil 1 und einen zweiten Scharnierteil 2, wobei sowohl der erste Scharnierteil 1 als auch der zweite Scharnierteil 2 an den Brillenrahmen oder an den Brillenbügel anschließen kann. In der dargestellten Ausführungsvariante bildet der erste Scharnierteil 1 eine Halterung für den Brillenrahmen 3, während der zweite Scharnierteil 2 an die Brillenbügel 4 anschließt. Der erste Scharnierteil 1 umfasst einen mittleren Scharnierlappen 5, von dem beidseits zwei den Scharnierzapfen 6 bildende Zapfenstummel abstehen. Diese Zapfenstummel des Scharnierzapfens 6 werden auf beiden Seiten des mittleren Scharnierlappens 5 von zwei Armen 7 und 8 des zweiten Scharnierteils 2 zangenartig umgriffen, wobei die Arme 7 und 8 selbst zwei den mittleren Scharnierlappen 5 des ersten Scharnierteils 1 umgreifende Scharnierlappen bilden.

Die beiden Arme 7 und 8 des zweiten Scharnierteils 2 bilden im Bereich ihres offenen Endes zwei den Scharnierzapfen 6 aufnehmende Lagerschalen 9 und werden über einen gemeinsamen Steg des Scharnierteils 2 miteinander verbunden. Von diesem Steg des Scharnierteils 2 steht zwischen den beiden Armen 7 und 8 eine radial zum Scharnierzapfen verlaufende Rastzunge 10 ab, die wechselweise in eine von wenigstens zwei Rastaufnahmen 11 des Scharnierzapfens 6 eingreift.

Bei einem Verdrehen der beiden Scharnierteile 1 und 2 zueinander, muss die Rastzunge 10, um von einer zur nächsten Rastaufnahme 11 des Scharnierzapfens 6 zu gelangen, einem dazwischen liegenden Höcker 12 durch eine elastische Verformung ausweichen, sodass es einerseits von Vorteil ist, dass die Rastzunge 10 eine entsprechende Länge aufweist und anderseits die Leichtgängigkeit des Scharniergelenks verbessert wird, wenn die beiden Arme 7 und 8 im Bereich des Stegs des Scharnierteils 2 Einschnürungen 13 aufweisen. Die Länge der Rastzunge 10 kann durch die Wahl des Abstandes des Stegs des Scharnierteils 2 vom Scharnierzapfen 6 eingestellt werden. Besonders vorteilhafte Konstruktionsbedingungen ergeben sich bei einem erfindungsgemäßen Scharniergelenk aus Horn, wenn der Steg im Bereich vom einfachen bis zweifachen Radius des Scharnierzapfens 6 von diesem radial entfernt angeordnet ist.

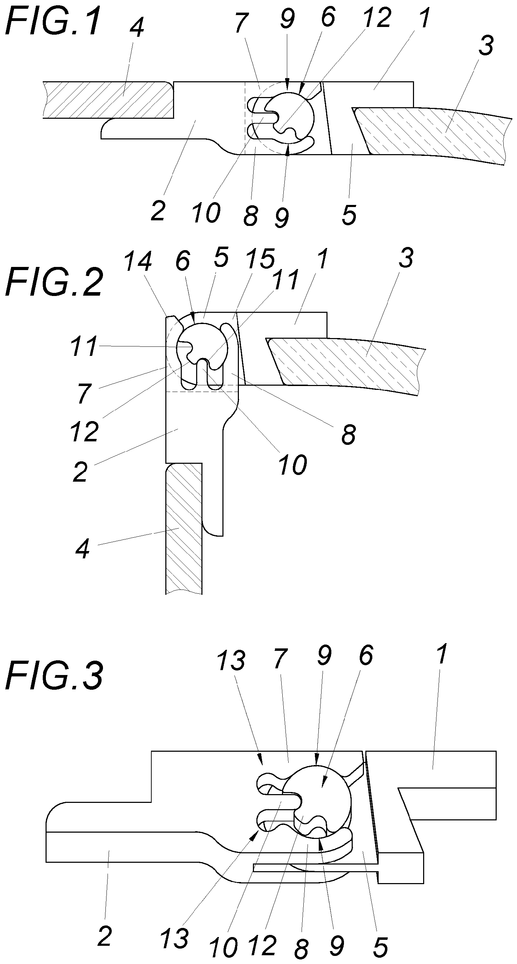

Um zu verhindern, dass das Scharniergelenk über die in der Fig. 1 dargestellte Offenstellung hinaus verdreht werden kann, kann ein Arm 7 des zweiten Scharnierteils 2 länger als der andere Arm 8 dieses Scharnierteils 2 ausgebildet sein und einen Drehanschlag 14 für eine Anschlagfläche 15 des ersten Scharnierteils 1 bilden.

Obwohl ein erfindungsgemäßes Scharniergelenk sowohl in der eben beschriebenen Ausführungsform ausgestaltet werden kann, bei der der Scharnierzapfen 6 über einen mittleren Scharnierlappen 5 mit dem ersten Scharnierteil 1 verbunden ist, während die Arme und in einer besonderen Ausführungsvariante auch die Rastzunge 10 des zweiten Scharnierteils 2 zwei Scharnierlappen 5 bilden, zwischen denen der erste mittlere Scharnierlappen 5 des ersten Scharnierteils 1 geführt ist, umfasst die Erfindung gleichermaßen auch jene Ausführungsvarianten, bei denen der Scharnierzapfen auf seiner in Axialrichtung oben und unten liegenden Seite mit zwei Scharnierlappen 5 mit dem Scharnierteil 1 verbunden ist, während die Arme 7 und 8 und die Rastzunge 10 des zweiten Scharnierteils 2 einen zwischen den beiden Scharnierlappen 5 des ersten Scharnierteils geführten mittleren Scharnierlappen bilden.

In der ersten und eingangs beschriebenen Ausführungsvariante ist es konstruktiv von Vorteil, wenn der mittlere Scharnierlappen 5 des ersten Scharnierteils 1 nicht nur zwischen zwei durch die Arme 7, 8 gebildeten Scharnierlappen 5 geführt wird, sondern wenn auch die Rastzunge 10 und in einer weiteren Ausführungsform auch der Steg des Scharnierteils 2 einen Teil dieser beiden Scharnierlappen bilden.

## Patentansprüche

1. Scharniergelenk für eine Brille mit einem einen Scharnierzapfen (6) aufweisenden ersten und einem den Scharnierzapfen (6) zangenartig umgreifende Arme (7, 8) besitzenden zweiten Scharnierteil (2), **dadurch gekennzeichnet, dass** der zweite Scharnierteil (2) zwischen seinen beiden Armen (7, 8) eine radial zum Scharnierzapfen (6) verlaufende Rastzunge (10) aufweist, die wechselweise in eine von wenigstens zwei Rastaufnahmen (11) des Scharnierzapfens (6) eingreift.

2. Scharniergelenk nach Anspruch 1, **dadurch gekennzeichnet, dass** die Arme (7, 8) des zweiten Scharnierteiles (2) im Bereich ihres offenen Endes den Scharnierzapfen (6) aufnehmende Lagerschalen (9) bilden und dass von dem mit radialem Abstand vom Scharnierzapfen (6) verlaufenden, die beiden Arme (7, 8) verbindenden Steg die Rastzunge (10) absteht.

3. Scharniergelenk nach Anspruch 2, **dadurch gekennzeichnet, dass** die Arme im Bereich des Stegs eine Einschnürung (13) aufweisen.

4. Scharniergelenk nach einem der Ansprüche 1 bis 3, **dadurch gekennzeichnet, dass** einer der beiden Arme (7, 8) des zweiten Scharnierteils (2) länger als der andere ausgebildet ist und einen Drehanschlag (14) für den ersten Scharnierteil (1) bildet.

5. Scharniergelenk nach einem der Ansprüche 1 bis 4, **dadurch gekennzeichnet, dass** der zweite Scharnierteil (2) zwei die Arme (7, 8) bildende Scharnierlappen (5) aufweist, zwischen denen ein mittlerer Scharnierlappen (5) des ersten Scharnierteils (1) geführt ist, und dass beidseits des mittleren Scharnierlappens (5) zwei den Scharnierzapfen (6) bildende Zapfenstummel abstehen.

6. Scharniergelenk nach Anspruch 5, **dadurch gekennzeichnet, dass** der Scharnierlappen (5) des ersten Scharnierteils (1) zwischen zwei Scharnierlappen (5) der Rastzunge (10) geführt ist.

## Claims

1. Hinge joint for spectacles having a first hinge part, comprising a hinge pin (6), and a second hinge part (2), having arms (7, 8) surrounding the hinge pin (6) in a pincer-like manner, **characterised in that** the second hinge part (2), between its two arms (7, 8), comprises a latching tongue (10) extending radially towards the hinge pin (6), which latching tongue selectively engages into one of at least two latching receivers (11) of the hinge pin (6).

2. Hinge joint as claimed in claim 1, **characterised in that** the arms (7, 8) of the second hinge part (2), in the region of their open end, form bearing shells (9) receiving the hinge pin (6), and that the latching tongue (10) stands out from the web which extends radially spaced apart from the hinge pin (6) and connects the two arms (7, 8).

3. Hinge joint as claimed in claim 2, **characterised in that** the arms comprise a narrowing (13) in the region of the web.

4. Hinge joint as claimed in any one of claims 1 to 3, **characterised in that** one of the two arms (7, 8) of the second hinge part (2) is longer than the other and forms a rotational stop (14) for the first hinge part (1).

5. Hinge joint as claimed in any one of claims 1 to 4, **characterised in that** the second hinge part (2) comprises two hinge plates (5) forming the arms (7, 8), between which a middle hinge plate (5) of the first hinge part (1) is guided, and that two pin stubs forming the hinge pin (6) stand out on both sides of the middle hinge plate (5).

6. Hinge joint as claimed in claim 5, **characterised in that** the hinge plate (5) of the first hinge part (1) is guided between two hinge plates (5) of the latching tongue (10).

## Revendications

1. Charnière pour lunettes comprenant une première partie de charnière présentant un tourillon de charnière (6) et une deuxième partie de charnière (2) possédant des bras (7, 8) qui entourent le tourillon de charnière (6) à la manière d'une pince, **caractérisée en ce que** la deuxième partie de charnière (2) présente entre ses deux bras (7, 8) une languette d'encliquetage (10) qui s'étend radialement par rapport au tourillon de charnière (6) et qui s'engage alternativement dans un parmi au moins deux logements d'encliquetage (11) du tourillon de charnière (6).

2. Charnière selon la revendication 1, **caractérisée en ce que** les bras (7, 8) de la deuxième partie de charnière (2) forment dans la région de leur extrémité ouverte des coussinets de palier (9) qui accueillent le tourillon de charnière (6), et **en ce que** la languette d'encliquetage (10) fait saillie au-dessus de la nervure qui s'étend à distance radiale du tourillon de charnière (6) et qui relie les deux bras (7, 8).

3. Charnière selon la revendication 2, **caractérisée en ce que** les bras présentent un étranglement (13) dans la région de la nervure.

4. Charnière selon l'une quelconque des revendications 1 à 3, **caractérisée en ce que** l'un des deux bras (7, 8) de la deuxième partie de charnière (2) est plus long que l'autre et forme une butée de rotation (14) pour la première partie de charnière (1).

5. Charnière selon l'une quelconque des revendications 1 à 4, **caractérisée en ce que** la deuxième partie de charnière (2) présente deux pattes de charnière (5) qui constituent les bras (7, 8), entre lesquelles une patte de charnière centrale (5) de la première partie de charnière (1) est guidée, et **en ce que** deux bouts de tourillon qui forment le tourillon de charnière (6) font saillie de part et d'autre de la patte de charnière centrale (5).

6. Charnière selon la revendication 5, **caractérisée en ce que** la patte de charnière (5) de la première partie de charnière (1) est guidée entre deux pattes de charnière (5) de la languette d'encliquetage (10).
